# EUROPEAN PATENT APPLICATION

(11) **EP 2 669 587 A1**
(43) Date of publication of application: **04.12.2013**
(21) Application number: 11856642.1
(22) Date of filing: 28.01.2011
(51) Int. Cl.: F24F 11/02

(54) **REMOTE CONTROL DEVICE AND AIR-CONDITIONING SYSTEM**

(71) Applicant: Mitsubishi Electric Corporation, Tokyo 100-8310 (JP)
(72) Inventor: GYOTA Tomoaki, Tokyo 100-8310 (JP); NAKATA Masanori, Tokyo 100-8310 (JP)
(74) Representative: Pfenning, Meinig & Partner GbR
(86) International application number: PCT/JP2011/051829
(87) International publication number: WO 2012/101832

(57) **Abstract**

An image indicating a space to be air-conditioned in an office building is formed by rectangular pattern images (P1-P5) having fill patterns which differ according to an air-conditioning status, and a frame image (FR) overlapping the pattern images (P1-P5). In this case, when an air-conditioning status such as the temperature or humidity of each area as a space to be air-conditioned changes, the rectangular pattern images (P1-P5) have only to be redrawn with their display colors being changed, regardless of the shape of each area. Accordingly, the amount of information to be handled when updating the image according to a change in the air-conditioning status is reduced, and the image can be updated accurately in a short period of time.

## Description

### Technical Field

The present invention relates to a remote control device and an air-conditioning system, and, more particularly, to a remote control device having a display screen, and an air-conditioning system that is driven based on a command from the remote control device.

### Background Art

A plurality of air conditioners which are disposed in tenant or work space in a commercial facility typified by an office building are in general centrally controlled by a common remote control device. Because air conditioners have comparatively large power consumption, adjusting the outputs of those air conditioners can efficiently promote energy saving. In this respect, remote control devices equipped with a graphical user interface (GUI) which easily controls a plurality of air conditioners individually are growing popular (see, for example, PTL 1 to 4).

Using a GUI-equipped remote control device, a user can manipulate individual air conditioners while viewing the layout and operational conditions of the air conditioners which are displayed on the GUI, and the plan of the floor where the air conditioners are disposed.

### Citation List

### Patent Literature

PTL 1: Unexamined Japanese Patent Application Kokai Publication No. H4-39564
PTL 2: Unexamined Japanese Patent Application Kokai Publication No. 2005-308278
PTL 3: Unexamined Japanese Patent Application Kokai Publication No. 2010-175638
PTL 4: Unexamined Japanese Patent Application Kokai Publication No. 2010-175786

### Summary of Invention

### Technical Problem

A remote control device is generally disposed on a wall, and thus has a size restriction. Therefore, it is preferable that the sizes of image information and a program that are used to display an image on a GUI should be smaller. Accordingly, the GUIs of the controllers that are described in PTL 1 and 2, for example, exemplarily display the layout and operational conditions of the air conditioners to be controlled, or the plan of the floor where the air conditioners are disposed, by combining rectangular figures.
This reduces the amount of image information which are handled at the time of drawing an image.

When the shapes of the floor where the air conditioners are disposed are complex, or when columns or the like with shapes other than a rectangle are arranged on a floor, however, the shape of the floor display on the GUI differs from the actual shape of the floor where the air conditioners are disposed.

The devices described in PTL 3 and 4 carry out a part of the drawing process that is executed by the GUI by means of hardware such as a graphics engine, thereby relieving the process executed by the GUI. Because the hardware-based processing needs to be general-purpose processing, however, it is comparatively difficult to draw different shapes according to floors.

In consideration of the aforementioned circumstances, it is an object of the invention to accurately display the image of the floor where air conditioners are disposed.

### Solution to Problem

To achieve the object of the invention, a remote control device according to the invention is a remote control device with a display screen, comprising:
first storage means that stores control information for controlling an air conditioner disposed in a space to be air-conditioned;
second storage means that stores first information regarding a first image representing an air-conditioning status of the space to be air-conditioned, and second information regarding a second image representing a structure defining the space to be air-conditioned; and
a graphics engine that draws the first image on display means and fills the first image with a pattern defined by the control information based on the first information, and draws the second image over the first image on display means based on the second information.

### Advantageous Effects of Invention

According to the invention, a space to be air-conditioned is represented by a first image whose fill pattern differs according to the air-conditioning status, and a second image overlapping the first image. Accordingly, of the image representing the space to be air-conditioned, a portion representing a floor or the air-conditioning range for which fill pattern differs according to the air-conditioning status is formed by the first image, and a portion representing the outer wall or a partition which does not change regardless of the air-conditioning status is formed by the second image overlapping the first image, so that portions representing a floor or the like can be displayed using simple figures, and the entire space to be air-conditioned can be accurately displayed in real.

### Brief Description of Drawings

FIG. 1 is a block diagram of an air-conditioning system according to a first embodiment;
FIG. 2 is a diagram showing the layout of a work space as a space to be air-conditioned;
FIG. 3 is a diagram showing an image to be displayed on a liquid crystal panel;
FIG. 4 is a diagram showing a frame image;
FIG. 5 is a diagram showing pattern images;
FIG. 6 is an exploded perspective view of the image to be displayed on the liquid crystal panel;
FIG. 7 is a diagram showing operational information to be stored in an air-conditioning information memory;
FIG. 8 is a diagram showing image information to be stored in an area definition memory;
FIG. 9 is a diagram showing color information to be stored in an expression form memory;
FIG. 10 is a flowchart illustrating a process which is executed by an area drawing manager;
FIG. 11 is a flowchart illustrating the process which is executed by the area drawing manager;
FIG. 12 is a diagram for explaining the difference drawing process executed by the area drawing manager;
FIG. 13 is a block diagram of an air-conditioning system according to a second embodiment;
FIG. 14 is a diagram showing an image to be displayed on a liquid crystal panel;
FIG. 15 is an exploded perspective view of the image to be displayed on the liquid crystal panel;
FIG. 16 is a diagram showing operational information to be stored in an air-conditioning information memory;
FIG. 17 is a diagram showing image information to be stored in a layer-specified area definition memory;
FIG. 18 is a diagram showing image information to be stored in a layer-by-layer mesh image memory;
FIG. 19 is a diagram showing color information to be stored in an expression form memory;
FIG. 20 is a flowchart illustrating processes which are executed by an area drawing manager; and
FIG. 21 is a flowchart illustrating processes which are executed by the area drawing manager.

### Description of Embodiments

### (First Embodiment)

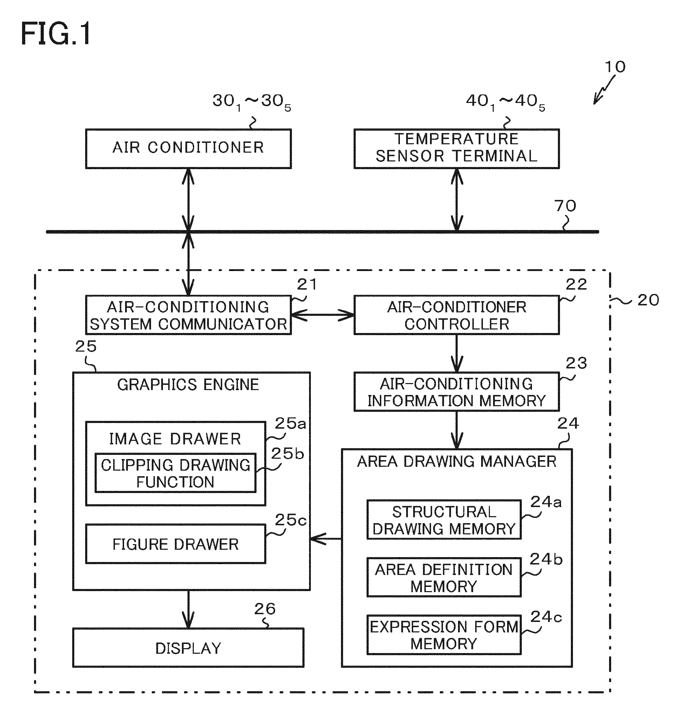

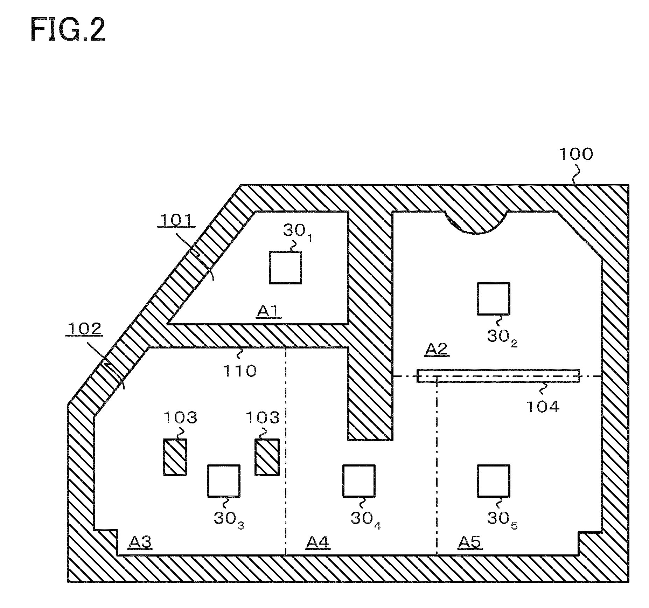

A first embodiment of the invention is described hereinafter referring to the accompanying drawings. FIG. 1 is a block diagram of an air-conditioning system 10 according to the first embodiment. This air-conditioning system 10 air-conditions work spaces 101 and 102 provided in an office building 100 shown in FIG. 2. As shown in FIG. 1, the air-conditioning system 10 includes five air conditioners 30₁ to 30₅, five temperature sensor terminals 40₁ to 40₅ that measures the temperatures in the spaces to be air-conditioned by the air conditioners 30₁ to 30₅, and a remote control device 20 that controls the air conditioners 30.

Each of the work spaces 101 and 102 is, for example, an office where a plurality of workers work at desks. As shown in FIG. 2, the work space 101 and the work space 102 are separated from each other by a partition wall 110, and two columns 103 which support the ceiling, and a partition 104 are disposed in the work space 102. And the air conditioner 30₁ constituting the air-conditioning system 10 is disposed on the ceiling of the work space 101, and the air conditioners 30₂ to 30₅ are distributively disposed on the ceiling of the work space 102 in such a way that the air-conditioning ranges of the individual air conditioners do not overlap as much as possible.

According to the embodiment, as shown in FIG. 2, five areas A1 to A5 are defined in the work spaces 101 and 102 based on the air-conditioning ranges of the air conditioners 30. The area A1 matches with the work space 101. The area A1 is air-conditioned by the air conditioner 30₁. The areas A2 to A5 are the areas defined by separating the work space 102 based on the air-conditioning ranges of the air conditioners 30₂ to 30₅. The areas A2 to A5 are air-conditioned mainly by the air conditioners 30₂ to 30₅, respectively.

Each of the air conditioners 30₁ to 30₅ includes a heat exchanger, a blower fan, a louver unit, and a communication unit, etc. Those air conditioners 30₁ to 30₅ perform heat exchange of coolants circulating between themselves and, for example, outdoor units (not shown) and air in the work space 101 1 or the work space 102 based on an operation command given from the remote control device 20, thereby generating air-conditioned air. Then, the air conditioners 30₁ to 30₅ discharge the air-conditioned airs into the work spaces 101 and 102. In addition, in response to a request from the remote control device 20, the air conditioners 30₁ to 30₅ inform the remote control device 20 of information such as the output powers, the discharging directions (wind directions) of the air-conditioned airs and operation modes, over a network 70.

The temperature sensor terminals 40₁ to 40₅ are respectively disposed in the air-conditioning ranges of the air conditioners 30₁ to 30₅. Each temperature sensor terminal 40 measures the indoor air temperature using, for example, a thermostat. Then, the temperature sensor terminal 40 outputs the measuring result to the remote control device 20 over the network 70 in response to a request from the remote control device 20.

The remote control device 20 includes an air-conditioning system communicator 21, an air-conditioner controller 22, and air-conditioning information memory 23, and area drawing manager 24, a graphics engine 25 and a display 26.

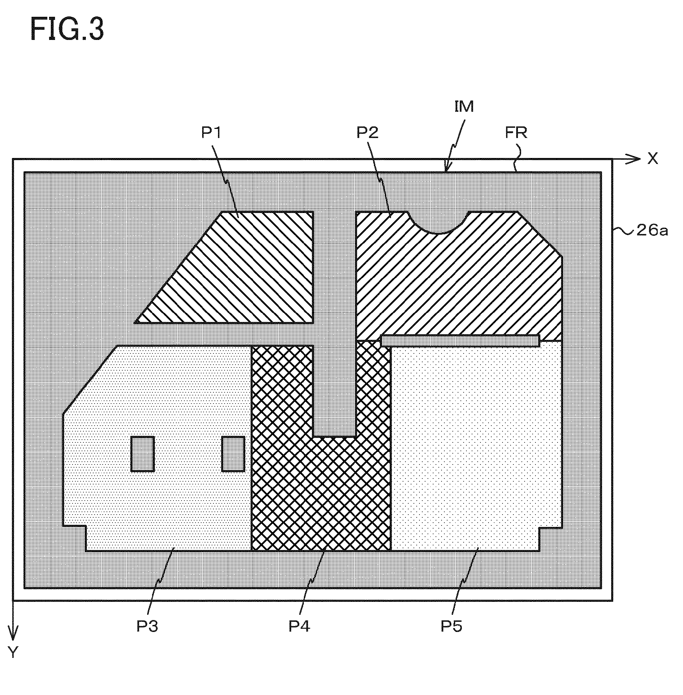

The display 26 has a rectangular liquid crystal panel or the like 26a (see FIG. 3) to display texts and graphics. This display 26 receives image information output from the area drawing manager 24 and the graphics engine 25. Then, the display 26 displays an image IM, defined by the received image information, on the liquid crystal panel 26a. A position on the liquid crystal panel 26a is specified by XY coordinates with, for example, the upper left corner taken as the origin. The screen of the liquid crystal panel 26a includes pixels arranged in a matrix of 240 rows and 320 columns.

FIG. 3 is a diagram showing an example of the image IM to be displayed on the liquid crystal panel 26a. As shown in FIG. 3, the image IM is an exemplary image representing the work spaces 101 and 102 formed in the office building 100. This image IM includes pattern images P1 to P5 corresponding to the respective areas, and a frame image FR overlapping those pattern images P1 to P5.

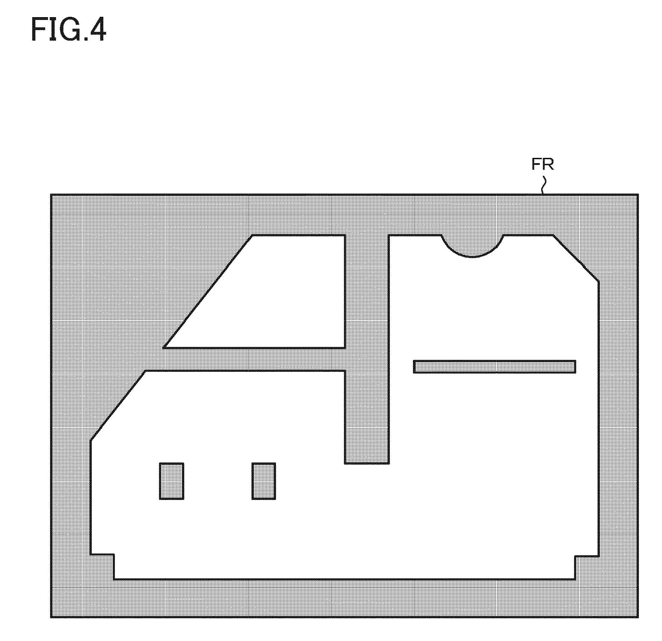

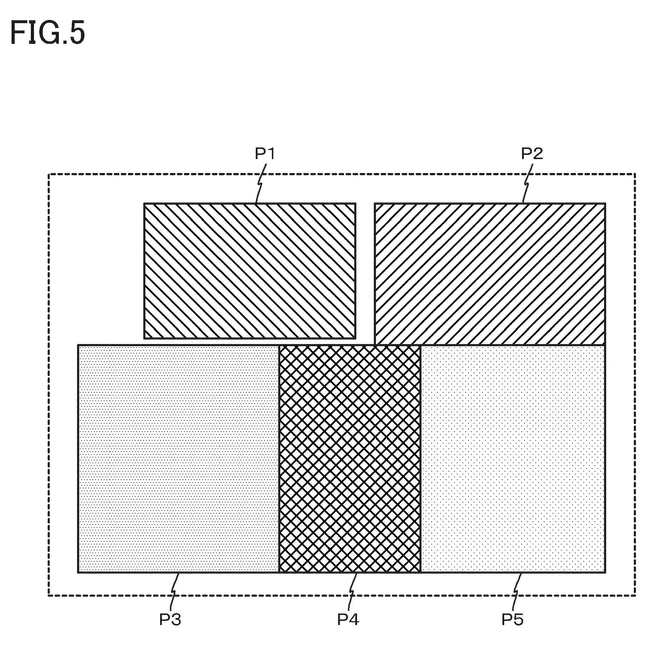

FIG. 4 is a diagram showing a frame image FR. FIG. 5 is also a diagram showing the pattern images P1 to P5. Further as shown in FIG. 4, the frame image FR indicate the walls, the columns 103, and the partition 104 defining the working space 101 and 102 shown in FIG 2. As shown in FIG. 5, the pattern images P1 to P5 are rectangular images corresponding to the areas A1 to A5 defined in the work spaces 101 and 102.

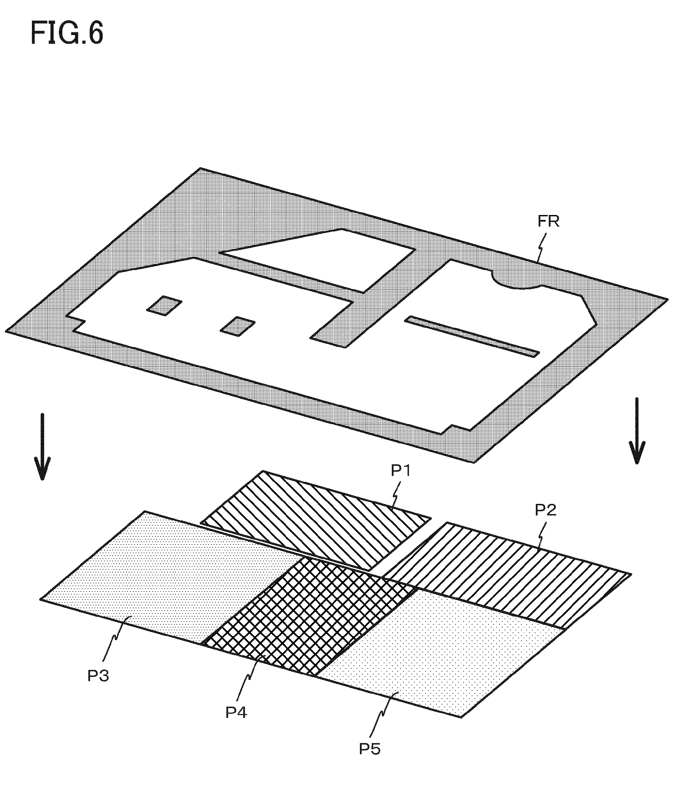

As exemplarily shown in FIG. 6, the liquid crystal panel 26a simultaneously displays the pattern images P1 to P5 and the frame image FR overlapping the pattern images P1 to P5 to thereby display the image IM that includes the pattern images P1 to P5 and the frame image FR overlapping those pattern images.

Returning to FIG. 1, the air-conditioning system communicator 21 is configured to include a serial interface or LAN (Local Area Network) interface or the like. The remote control device 20 is connected to the network 70 via the air-conditioning system communicator 21.

The air-conditioner controller 22 includes a CPU (Central Processing Unit), and storage medias such as RAM (Random Access Memory) to be a work area for the CPU and a EPROM (Erasable Programmable Read Only Memory) to store information including a program to be run by the CPU and various parameters. The air-conditioner controller 22 controls the output power of each air conditioner 30 and the direction of the wind therefrom based on, for example, the result of measurement taken by the temperature sensor terminal 40. Further, the will be described stores information on the statuses of the air conditioners 30 and the result of measurements taken by the temperature sensor terminals 40 in the air-conditioning information memory 23.

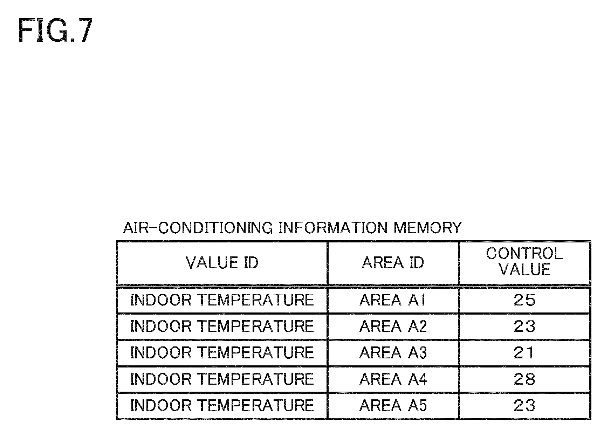

The air-conditioning information memory 23 stores information on the statuses of the air conditioners 30 (operational information). FIG. 7 illustrates a table exemplarily showing operational information to be stored in the air-conditioning information memory 23. As shown in FIG. 7, the operational information includes three elements of value ID, area ID and control value.

The control values are equivalent to the temperatures that are measured by the temperature sensor terminals 40₁ to 40₅. This control value is updated as the air-conditioner controller 22 stores the measurement result notified by the temperature sensor terminal 40 into the air-conditioning information memory 23. Therefore, the control values are equivalent to the current temperatures in the areas A1 to A5, respectively.

The value ID is information for specifying the type of the control value. This value ID makes it possible to determine whether the control value indicates an indoor temperature or the operation mode or the like. As apparent from FIG. 7, for example, the content of the value ID corresponding to the control value "25" in the first row is "indoor temperature". Therefore, it is understood from the value ID that this control value indicates the indoor temperature.

The area ID is information for specifying the area to which the control value belongs. This area ID makes it possible to determine to which one of the areas A1 to A5 the information of the control value belongs. As apparent from FIG. 7, for example, the content of the area ID corresponding to the control value "25" in the first row is "area A1". Therefore, it is understood from the area ID that this control value indicates information relating to the area A1, specifically, the indoor temperature in the area A1.

Returning to FIG. 1, the area drawing manager 24 includes a structural drawing memory 24a, an area definition memory 24b, and an expression form memory 24c. And when information stored in the air-conditioning information memory 23 is updated or so, information stored in each of the memories 24a to 24c is output.

The structural drawing memory 24a stores frame image information relating to a frame image FR. This frame image information mainly includes information for defining a frame image FR shown in FIG. 4, for example, and information relating to a level (layer) where this frame image FR is arranged. According to the embodiment, the shape of the frame image FR shown in FIG. 4 can be specified from the frame image information. Then, it is possible to specify that this frame image is displayed on a layer which overlaps the layer where the pattern images P1 to P5 are displayed.

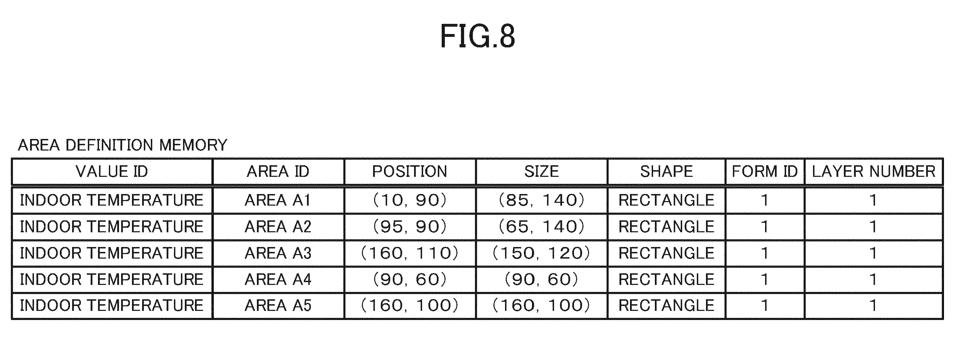

The area definition memory 24b stores information (image information) relating to the pattern images P1 to P5 shown in FIG. 5. FIG. 8 illustrates a table exemplarily showing image information to be stored in the area definition memory 24b. This image information is such that pieces of information listed in the first to fifth rows are respectively information on the individual pattern images P1 to P5 corresponding to the areas A1 to A5. As shown in FIG. 8, the image information on each of the pattern images P1 to P5 includes seven elements of value ID, area ID, positional information, size information, shape information, form ID, and layer number.

The positional information is information including an X coordinate and a Y coordinate in an XY coordinate system which is defined on the liquid crystal panel 26a. This positional information defines the display positions of the pattern images P1 to P5. For example, positional information (10, 90) in the first row means that the pattern image P1 is displayed at a position (10, 90) in the XY coordinate system defined on the liquid crystal panel 26a.

The size information is information including the width (X-axial directional size) and the height (Y-axial directional size) of each of the pattern images P1 to P5. Each of the X-axial directional and Y-axial directional sizes is given by a size d of a single pixel constituting the screen of the liquid crystal panel 26a as one unit. For example, size information (85, 140) in the first row means that the X-axial directional size of the pattern image P1 in the XY coordinate system is 85d, and the Y-axial directional size of the pattern image P1 in the XY coordinate system is 140d.

The shape information is information for specifying the shapes of the pattern images P1 to P5. This shape information makes it possible to determine whether each of the pattern images P1 to P5 is rectangular or circular.

The form ID is information for specifying objects indicated by the pattern images P1 to P5. For example, based on the form ID, it is possible to determine whether the pattern images P1 to P5 indicate the areas A1 to A5 or represent parts of a building such as the columns 103. According to the embodiment, "1" is assigned as the form ID to the pattern images P1 to P5 indicating the areas A1 to A5.

The layer number is information for specifying the layers where the pattern images P1 to P5 are arranged. The value of the layer number is given such that, for example, a layer number "1" is assigned to a lower layer, and a layer number "2" is assigned to an upper layer lying above the lower layer. For example, the layer number "1" in the first row means that the pattern image P1 is arranged on the lower layer.

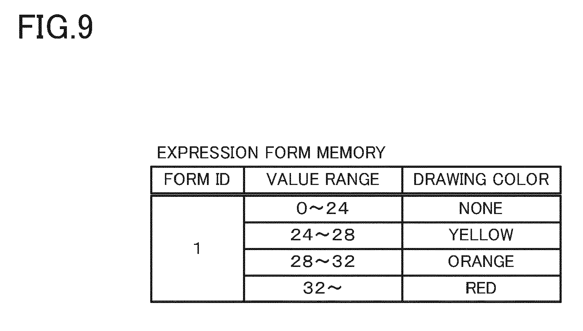

The expression form memory 24c stores information (color information) relating to display colors of the pattern images P1 to P5. FIG. 9 illustrates a table exemplarily showing color information to be stored in the expression form memory 24c. As shown in FIG. 9, the color information includes three elements of form ID, value range and drawing color information.

The drawing color information is information for defining the colors of the pattern images P1 to P5. This color information is selected according to the control range. When the aforementioned control value is equal to or greater than "0" and is less than "24", for example, the pattern images P1 to P5 are each displayed in the same color as the background color. Further, when the control value is equal to or greater than "24" and is less than "28", the pattern images P1 to P5 are each displayed in yellow. Further, when the control value is equal to or greater than "28" and is less than "32", the pattern images P1 to P5 are each displayed in orange. Further, when the control value is equal to or greater than "32", the pattern images P1 to P5 are each displayed in red.

Returning to FIG. 1, the graphics engine 25 displays an image based on the operational conditions of the air conditioners 30, the results of measurement taken by the temperature sensor terminals 40, and the like on the liquid crystal panel 26a of the display 26 on the basis of information from the area drawing manager 24. This graphics engine 25 has a image drawer 25a and a figure drawer 25c.

The image drawer 25a sequentially specifies figures of the frame image FR and the pattern images P1 to P5, which form the image IM, based on information stored in the individual memories 24a and 24c of the area drawing manager 24. The image drawer 25a then draws the specified images on the liquid crystal panel 26a of the display 26. This image drawer 25a has a clipping drawing function 25b for drawing an image only in a desired area (clipping area) of the liquid crystal panel 26a.

The figure drawer 25c fills a figure displayed on the display 26 with a color defined by the information stored in the expression form memory 24c.

Next, the drawing process of the remote control device 20 configured as described above is described. This process is achieved as the area drawing manager 24 outputs information necessary for drawing an image to the graphics engine 25. Further, this process includes two processes of a full drawing process S1 which is executed when nothing is displayed on the screen, such as upon activation of the device, and a different drawing process S2 which is executed when updating the display contents on the screen.

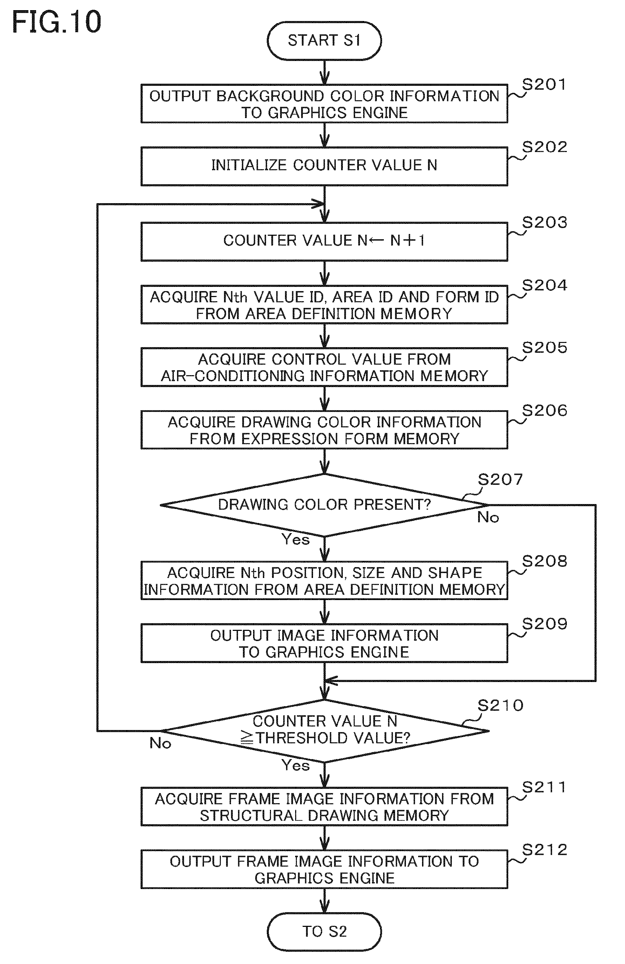

FIG. 10 is a flowchart illustrating the sequence of full drawing processing S1 which is executed by the area drawing manager 24. In first step S201, the area drawing manager 24 first outputs background color information defining the background color to the graphics engine 25. Specifically, the area drawing manager 24 outputs information (320, 240) indicating the size of an area including all the pixels forming the display 26, information relating to a position (0, 0), and information on the color of this area to the graphics engine 25. Accordingly, a background image of the color based on the background color information (for example, white) is displayed on the display 26.

In next step S202, the area drawing manager 24 initializes a counter value N of a built-in counter. Accordingly, the counter value N is reset to "0".

In next step S203, the area drawing manager 24 increments the counter value N.

In next step S204, the area drawing manager 24 reads a value ID, an area ID and a form ID for an Nth pattern image from the area definition memory 24b. When the counter value N is "1", for example, the area drawing manager 24 reads the value ID, the area ID and the form ID positioned in the first row in the table shown in FIG. 8. Accordingly, the area drawing manager 24 acquires the value ID, the area ID and the form ID for the pattern image P1 corresponding to the area A1.

In next step S205, the area drawing manager 24 reads a control value according to the area ID acquired in step S204 from the air-conditioning information memory 23. When the area ID whose content is "area A1" is acquired in step S204, for example, the area drawing manager 24 reads a value "25" of the control value positioned in the first row in the table shown in FIG. 7. Accordingly, the area drawing manager 24 acquires the control value for the pattern image P1 corresponding to the area A1.

In next step S206, the area drawing manager 24 reads, from the expression form memory 24c, drawing color information, which corresponds to the form ID acquired in step S204 and is defined by the control value acquired in step S205. When the content of the area ID acquired in step S204 is "area A1" and the control value acquired in step S205 is "25", for example, the area drawing manager 24 reads, from the table shown in FIG. 9, drawing color information whose content is "yellow" as drawing color information at the time when the control value is equal to or greater than "24" and is less than "28".

In next step S207, the area drawing manager 24 determines whether the content of the drawing color information is "none", or other than "none", namely, "yellow", "orange" or "red", as seen with reference to FIG. 9. When the content of the drawing color information is neither "yellow", "orange" nor "red" (step S207: No), the area drawing manager 24 goes to step S210. When the content of the drawing color information is one of "yellow", "orange" and "red" (step S207: Yes), on the other hand, the area drawing manager 24 goes to step S208.

In step S208, the area drawing manager 24 reads positional information, size information and shape information for an Nth pattern image from the area definition memory 24b. When the counter value N is "1", for example, the area drawing manager 24 reads the positional information, size information and shape information positioned in the first row in the table shown in FIG. 8. Accordingly, the area drawing manager 24 acquires the positional information, size information and shape information for the pattern image P1 corresponding to the area A1.

In next step S209, the area drawing manager 24 outputs image information relating to the pattern image acquired in steps S208 and S206 to the graphics engine. When the counter value N is "1", for example, the area drawing manager 24 outputs the positional information, size information and shape information positioned in the first row in the table shown in FIG. 8, and the drawing color information shown in FIG. 9 to the graphics engine. Accordingly, the rectangular pattern image P1 with the X-axial directional size and the Y-axial directional size of (85d, 140d) is drawn on the liquid crystal panel 26a of the display 26 at a position corresponding to the position of (10, 90). Next, this pattern image P1 is filled with a color corresponding to the display color of "yellow".

In next step S210, the area drawing manager 24 determines whether the counter value N is equal to or greater than a threshold value. The threshold value is equivalent to the number of pattern images P1 to P5 to be displayed on the display 26, and is "5" here. When the counter value N is not equal to or greater than the threshold value, the area drawing manager 24 returns to step S203 to thereafter repetitively execute the processes of steps S203 to S210 until the decision in step S210 becomes affirmative. Accordingly, as shown in FIG. 5, the pattern images P1 to P5 filled with predetermined colors are sequentially drawn on the liquid crystal panel 26a of the display 26. When the counter value N is equal to or greater than the threshold value (=5), on the other hand, the area drawing manager 24 goes to step S211.

In step S211, the area drawing manager 24 acquires frame image information from the structural drawing memory 24a.

In next step S212, the area drawing manager 24 outputs the frame image information to the graphics engine 25. Accordingly, a frame image FR shown in FIG. 4 is drawn on an upper layer, and an image IM shown in FIG. 3 is displayed on the liquid crystal panel 26a of the display 26.

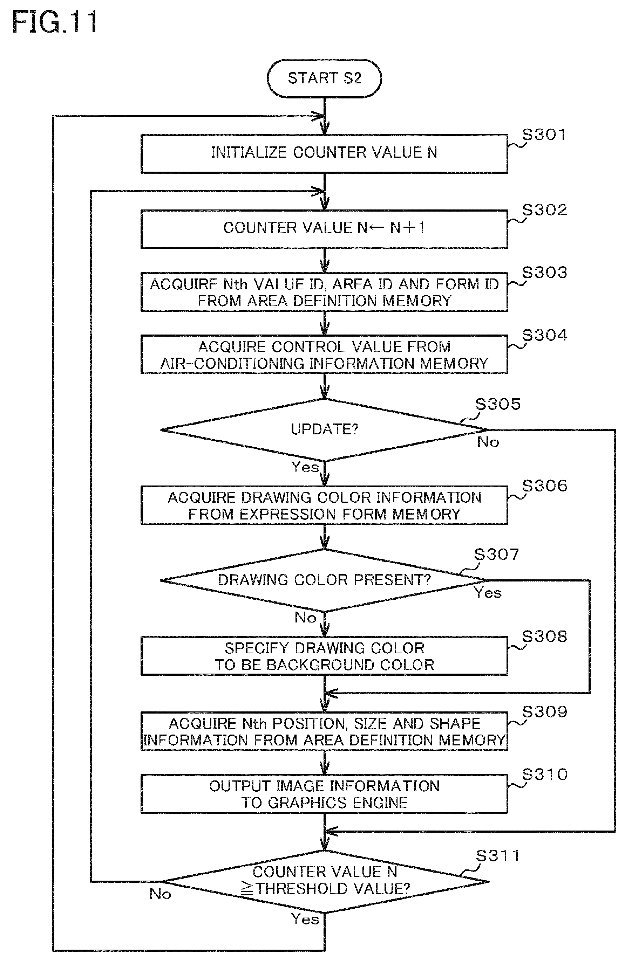

When the processing heretofore is completed, the area drawing manager 24 initiates the difference drawing process S2 shown in FIG. 11. To begin with, in first step S301, the area drawing manager 24 initializes the counter value N of the built-in counter.

In next step S302, the area drawing manager 24 increments the counter value N.

In next step S303, the area drawing manager 24 reads a value ID, an area ID and a form ID for an Nth pattern image from the area definition memory 24b. Accordingly, the area drawing manager 24 acquires the value ID, the area ID and the form ID for the area A1.

In next step S304, the area drawing manager 24 reads a control value according to the area ID acquired in step S303 from the air-conditioning information memory 23. Accordingly, the area drawing manager 24 acquires the control value for one of the areas A1 to A5.

In next step S305, the area drawing manager 24 determines whether the control value for the area A1 to A5 is updated. This decision is made by comparing the control value acquired just previously with the latest control value. When the area drawing manager 24 determines that the control value has not been updated (step S305: No), the area drawing manager 24 goes to step S311. When the area drawing manager 24 determines that the control value has been updated (step S305: Yes), on the other hand, the area drawing manager 24 goes to step S306.

In step S306, the area drawing manager 24 reads, from the expression form memory 24c, drawing color information, which corresponds to the form ID acquired in step S303 and is defined by the control value acquired in step S304. Accordingly, the area drawing manager 24 acquires the drawing color information. When the content of the control value is updated to "30" from "25", for example, the area drawing manager 24 acquires drawing color information whose content is "orange".

In next step S307, the area drawing manager 24 determines whether the content of the drawing color information is "none", or other than "none", namely, "yellow", "orange" or "red", as seen with reference to FIG. 9. When the content of the drawing color information is one of "yellow", "orange" and "red" (step S307: Yes), the area drawing manager 24 goes to step S309.

In step S309, the area drawing manager 24 reads positional information, size information and shape information on an Nth pattern image from the area definition memory 24b. Accordingly, the area drawing manager 24 acquires the positional information, size information and shape information for one of the areas A1 to A5.

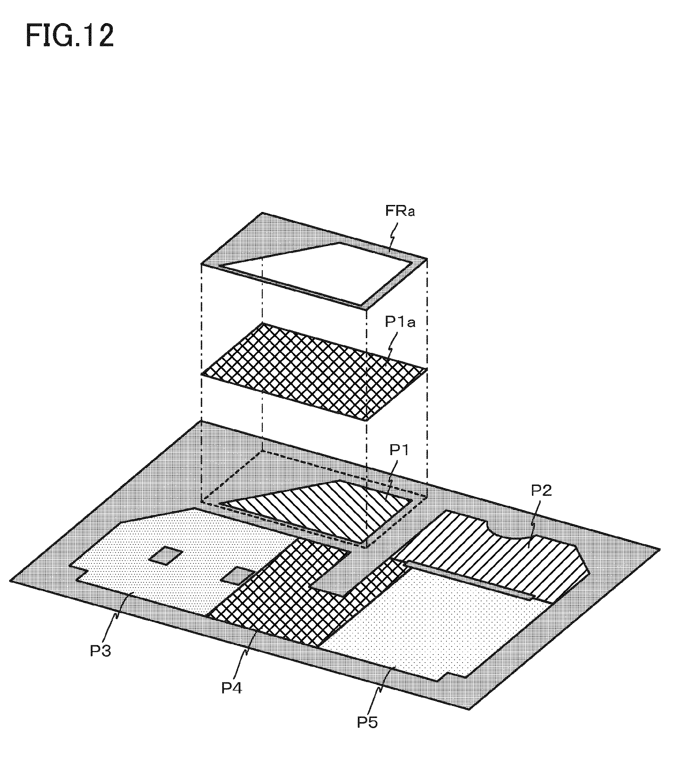

In next step S310, the area drawing manager 24 outputs image information relating to the pattern image acquired in step S306 and S309 to the graphics engine. Accordingly, the corresponding pattern image P1 to P5 is overwritten. For example when drawing color information whose positional information, size information and shape information are positioned in the first row in the table shown in FIG. 8 and whose content shown in FIG. 9 is "orange" is output to the graphics engine, as seen with reference to FIG. 12, a pattern image P1a filled with an orange color is drawn over the pattern image P1 and the frame image FR, and then a partial image FRa of the frame image FR which corresponds to the pattern image P1a is drawn over the pattern image P1a.

The drawing of this partial image FRa is achieved, for example, as the area drawing manager 24 outputs address information of that portion of the frame image FR which overlaps the image pattern to the graphics engine, and the graphics engine draws the frame image FR only in the area that is defined by this address.

Through the above-described processing, the color of the pattern image P1 shown in FIG. 3 is updated to "orange" from "yellow".

When the content of the drawing color information is "none" in step S307 (step S307: No), on the other hand, the area drawing manager 24 goes to step S308. In this case, drawing color information whose content is "background color" is output, and the pattern image P1 to P5 filled with the background color is written over in step S310.

In step S311, the area drawing manager 24 determines whether the counter value N is equal to or greater than a threshold value. This threshold value is equivalent to the number of pattern images P1 to P5 to be displayed on the display 26, and is "5" here. When the counter value N is not equal to or greater than the threshold value (step S311: No), the area drawing manager 24 returns to step S302 to thereafter repetitively execute the processes of steps S302 to S311 until the decision in step S311 becomes affirmative. When the counter value N is equal to or greater than the threshold value (step S311: Yes), on the other hand, the area drawing manager 24 returns to step S301 to initialize the counter value N. Then, the area drawing manager 24 executes the processes of steps S302 to S311. Accordingly, the colors of the pattern images P1 to P5 that form the image IM shown in FIG. 3 are sequentially updated with the update of the control values.

According to the embodiment, as described above, the image IM representing the space to be air-conditioned in the office building 100 is formed by rectangular pattern images P1 to P5 whose fill patterns vary according to the air-conditioning status and a frame image FR which overlaps the pattern images P1 to P5. When the air-conditioning status such as temperature or humidity of each area A1 to A5 as the space to be air-conditioned changes, therefore, the rectangular pattern images P1 to P5 have only to be drawn again with the display colors changed, regardless of the shapes of the individual areas A1 to A5. Therefore, the amount of information to be handled at the time of updating the image IM according to a change in air-conditioning status decreases, so that the image IM can be accurately updated in a short period of time.

According to the embodiment, a frame image FR shaped according to the individual areas A1 to A5 is displayed overlapping the pattern images P1 to P5.
Accordingly, the shapes of the areas A1 to A5 presented to the user by the pattern images P1 to P5 match the shapes of the areas A1 to A5 in the office building 100. Even when the shapes of the areas A1 to A5 are complex, therefore, the layout of the office building 100 can be displayed accurately.

According to the embodiment, as described above, the amount of information to be handled at the time of updating the image IM decreases. Therefore, a general-purpose drawing unit, rather than an operation device with a comparatively fast processing speed, can be used, thus achieving cost reduction and downsizing of the device.

According to the embodiment, the graphics engine 25 has a clipping drawing function 25b. When the air-conditioning status changes, therefore, only a pattern image P1 to P5 to be updated and a partial image FRa of the frame image FR that overlaps this pattern image are drawn (difference drawing process S2) as seen with reference to FIG. 12. This processing is not restrictive; when the graphics engine 25 does not have the clipping drawing function 25b, it is sufficient to perform the full drawing process S1 shown in FIG. 10 alone without performing the difference drawing process S2 shown in FIG. 11.

According to the embodiment, image information is saved uncompressed in the structural drawing memory 24a, the area definition memory 24b, and the expression form memory 24c that constitute the area drawing manager 24. This configuration is not restrictive, and image information may be saved compressed in each of the memories 24a to 24c. For example, run-length the encoding is available as the compression format of image information. When run-length the encoding is used, the hardware such as the graphics engine 25 can expand image information in order from the base address. Because the frame image FR represents the external wall or the like of the office building 100, it has multiple contiguous portions, thus making it possible to efficiently compress image information.

This embodiment has been described of the case where each of the pattern images P1 to P5 is a rectangle. The embodiment is not limited to this case, and each of the pattern images P1 to P5 may have a shape of a circle, triangle, parallelogram or the like. In case of such a polygonal shape, the drawing can be carried out at a high speed using the graphics engine 25. Further, when the areas A1 to A5 have triangular shapes or parallelogram shapes, the individual areas can be displayed using pattern images with shapes analogous to the shapes of the areas A1 to A5. Accordingly, an improvement on the drawing speed is expected.

The embodiment has been described of the case where the pattern images P1 to P5 are filled with "yellow", "orange" or "red", as seen with reference to FIG. 9. The process of filling the pattern images P1 to P5 may be carried out by, for example, placing tile images filled with each color on the pattern images P1 to P5.

Further, when the graphics engine 25 has a capability of filling the pattern images P1 to P5 with, for example, a mesh pattern, the pattern images P1 to P5 may be filled with a mesh pattern corresponding to, for example, room temperature or the like. The process of filling the pattern images P1 to P5 with a mesh pattern may be carried out by, for example, placing tile images filled with a mesh pattern on the pattern images P1 to P5. The use of a mesh pattern can ensure that the air-conditioning status of each area A1 to A5 is displayed even when the liquid crystal panel forming the display 26 is monochromatic. Further, the mesh pattern may be displayed in a color such as "yellow", "orange" or "red". This can present fuser friendly display of the air-conditioning status of each of the areas A1 to A5.

### (Second Embodiment)

A second embodiment of the invention is described next referring to the accompanying drawings. Similar reference numerals are used for same or similar configurations as those of the first embodiment, and the descriptions thereof are omitted or simplified.

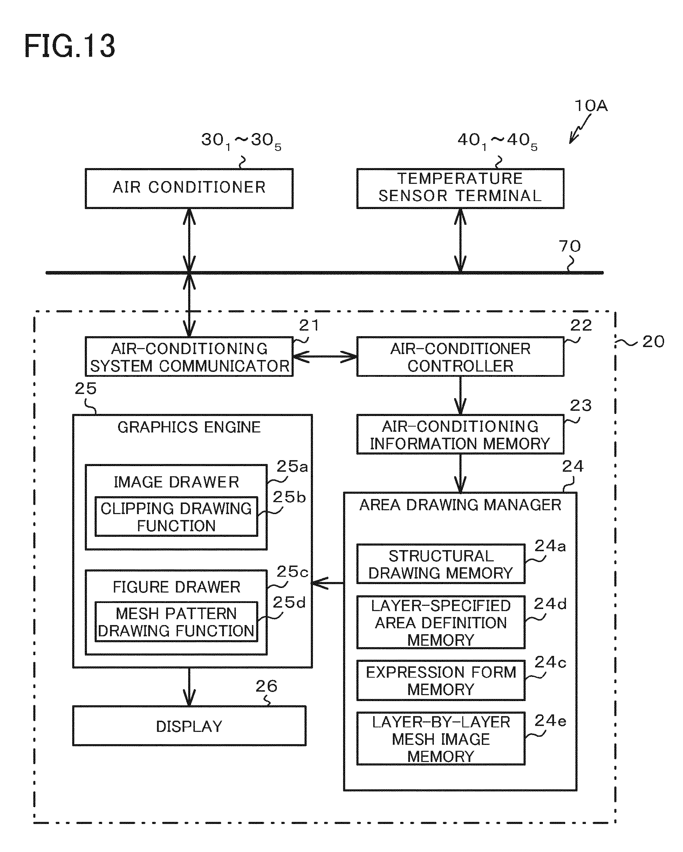

FIG. 13 is a block diagram of an air-conditioning system 10A according to this embodiment. As shown in FIG. 13, in the air-conditioning system 10A, unlike the air-conditioning system 10, the figure drawer 25c of the graphic engine that constitutes the remote control device 20 has a mesh pattern drawing function. In addition, the area drawing manager 24 has a layer-specified area definition memory 24d and a layer-by-layer mesh image memory 24e.

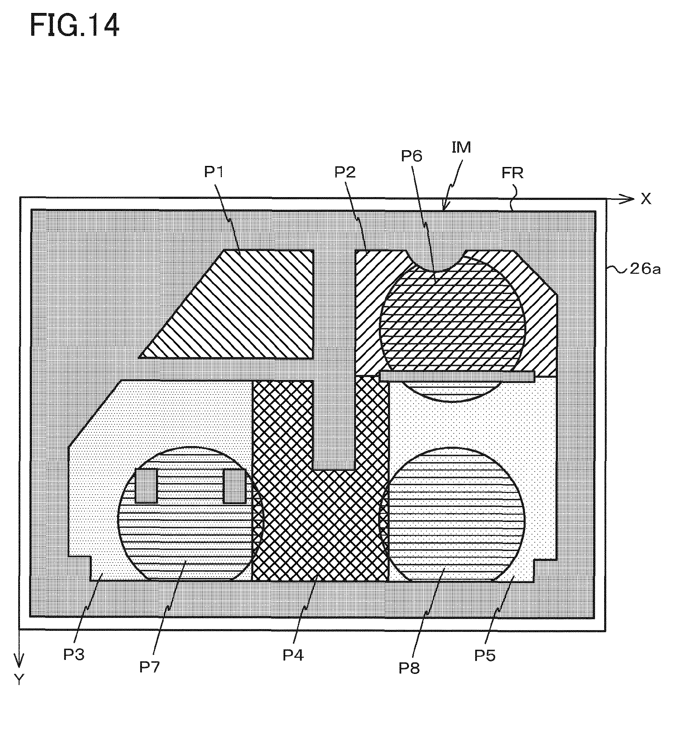

FIG. 14 is a diagram showing an example of an image IM displayed on the liquid crystal panel 26a of the display 26. As shown in FIG. 14, the image IM includes rectangular pattern images P1 to P5 corresponding to the individual areas, circular pattern images P6, P7, P8 representing the air conditioners 30 disposed in, for example, the areas A2, A3, A5, and a frame image FR overlapping those pattern images P1 to P8.

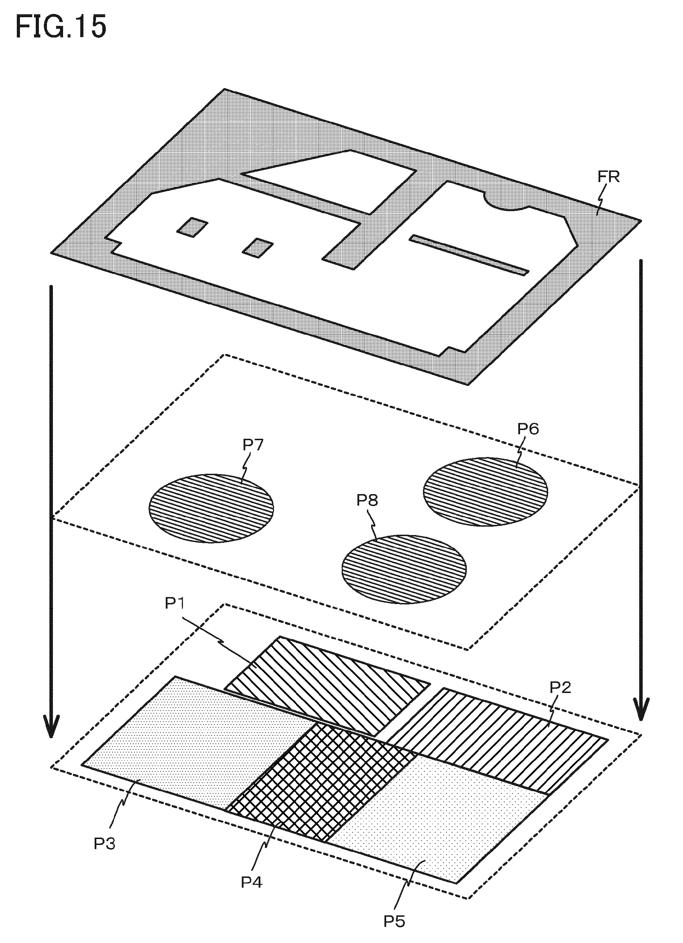

As exemplarily shown in FIG. 15, the pattern images P1 to P5 are disposed on the lowermost layer, the pattern images P6 to P8 are disposed on a layer which overlaps the layer where the pattern images P1 to P5 are disposed, and the frame image FR is disposed on the topmost layer overlapping the layer where the pattern images P6 to P8 are disposed. Hereinafter, for the sake of descriptive convenience, the layer where the pattern images P1 to P5 are disposed is defined as a first layer, the layer where the pattern images P6 to P8 are disposed is defined as a second layer, and the layer where the frame image FR is disposed is defined as a third layer.

Returning to FIG. 13, the mesh pattern drawing function 25d of the figure drawer 25c constituting the graphics engine 25 displays each of the pattern images P1 to P8 filled with a mesh pattern.

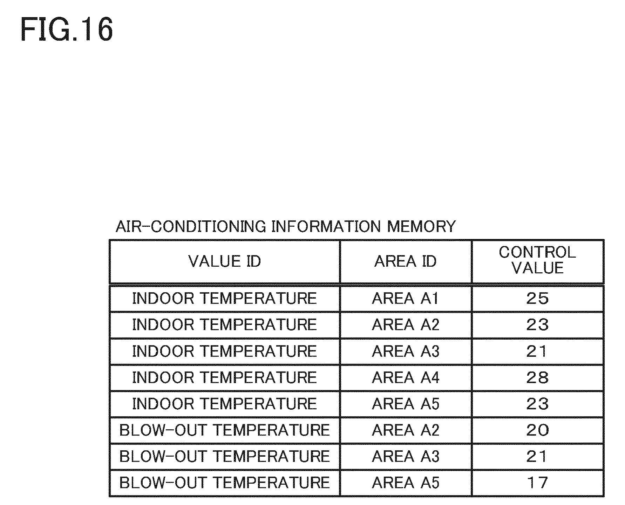

FIG. 16 illustrates a table exemplarily showing operational information to be stored in the air-conditioning information memory 23. As shown in FIG. 16, the operational information includes three elements of a value ID, an area ID, and a control value. The value ID makes it possible to determine whether the control value indicates an indoor temperature, or the temperature of air-conditioned air which is discharged from the air conditioner 30.

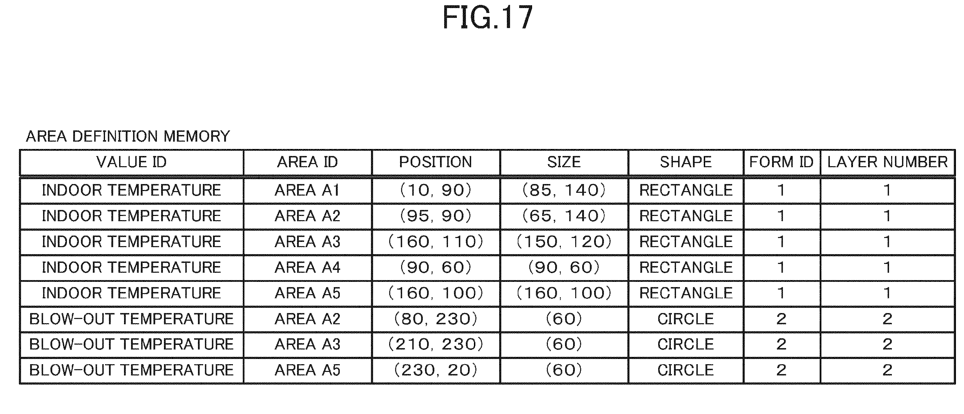

FIG. 17 illustrates a table exemplarily showing image information to be stored in the layer-specified area definition memory 24d. This image information is such that pieces of information shown in the first to fifth rows respectively concern the pattern images P1 to P5 corresponding to the areas A1 to A5, and pieces of information shown in the sixth to eighth rows respectively concern the pattern images P6 to P8 corresponding to the air-conditioning ranges of the air conditioners 30 set up in the areas A2, A3, A5. As shown in FIG. 17, image information on each of the pattern images P1 to P8 includes seven elements of a value ID, an area ID, positional information, size information, shape information, a form ID, and a layer number. According to the embodiment, layer number "1" means that a pattern image is disposed on the first layer, and layer number "2" means that a pattern image is arranged on the second layer.

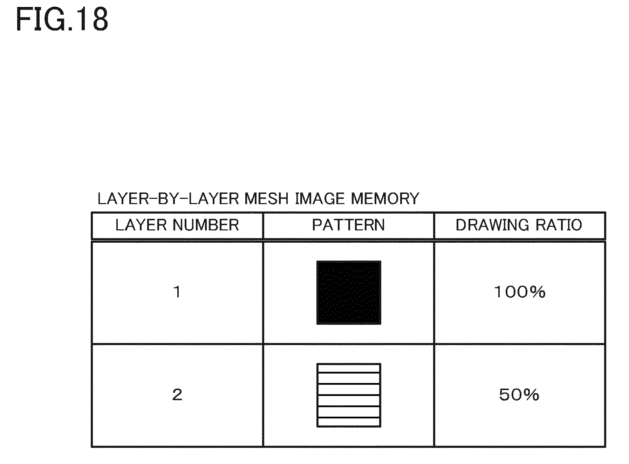

FIG. 18 illustrates a table exemplarily showing image information to be stored in the layer-by-layer mesh image memory 24e. This image information includes three elements of a layer number, a pattern, and a drawing ratio. Layer number "1" indicates the first layer, and layer number "2" indicates the second layer. Further, the pattern is the pattern when the pattern images P1 to P8 are filled. The drawing ratio represents the ratio of a filled portion to a portion which is not filled.

The image information in the first row in the table stored in the layer-by-layer mesh image memory 24e means that the pattern image disposed on the first layer is filled with a pattern having a drawing ratio of 100%, and the pattern image disposed on the second layer is filled with a pattern having a drawing ratio of 50%.

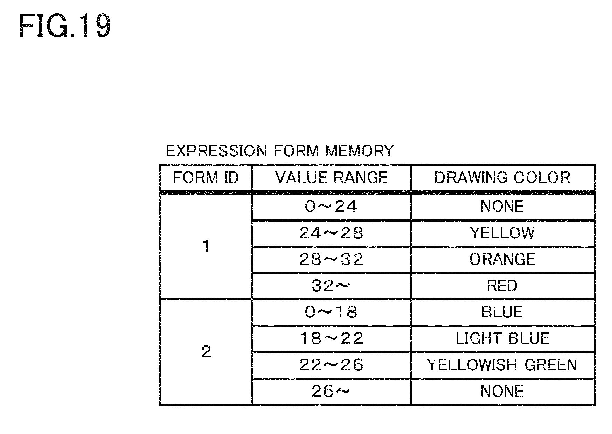

FIG. 19 illustrates a table exemplarily showing color information to be stored in the expression form memory 24c. As shown in FIG. 19, the color information includes three elements of a form ID, a value range, and drawing color information.
The form ID of "1" indicates that this information concerns the pattern images P1 to P5, and the form ID of "2" indicates that this information concerns the pattern images P6 to P8.

Next is a description of the drawing process performed by the remote control device 20 configured in the above-described manner. This process is achieved as information necessary for drawing an image is output from the area drawing manager 24 to the graphics engine 25.

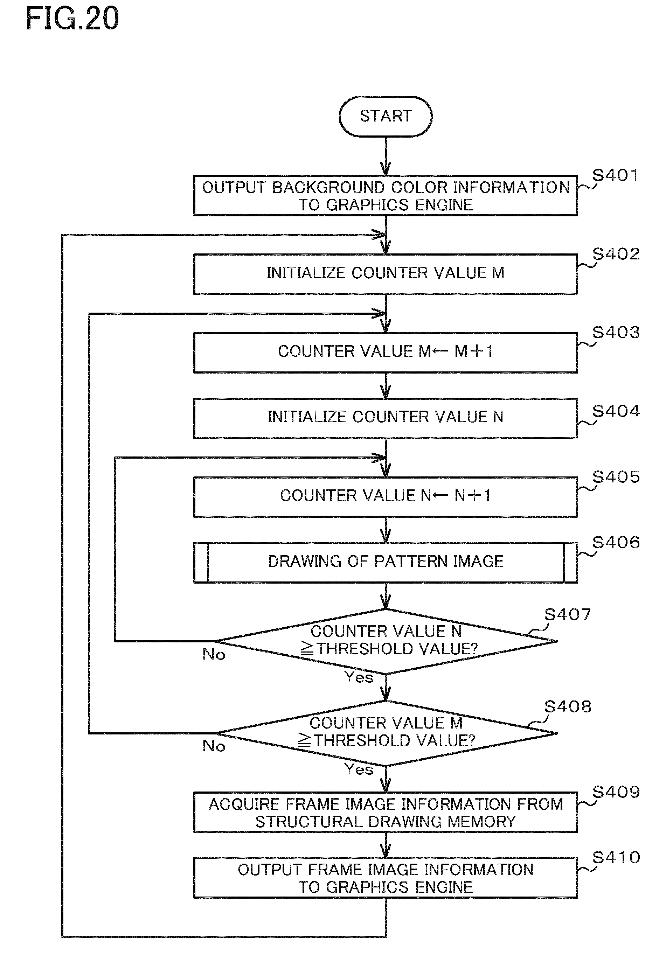

FIG. 20 is a flowchart illustrating a sequence of processes which is executed by the area drawing manager 24. In first step S401, the area drawing manager 24 first outputs background color information which defines the background color to the graphics engine 25. Specifically, the area drawing manager 24 outputs information (320, 240) indicating the size of an area including all the pixels constituting the display 26, information on a position (0, 0), and information on the color of this area to the graphics engine 25. As a result, a background image of a color (for example, white) based on the background color information is displayed on the display 26.

In next step S402, the area drawing manager 24 initializes a counter value M of a built-in counter. Accordingly, the counter value M is reset to "0".

In next step S403, the area drawing manager 24 increments the counter value M.

In next step S404, the area drawing manager 24 initializes a counter value N of a built-in counter. Accordingly, the counter value N is reset to "0".

In next step S405, the area drawing manager 24 increments the counter value N.

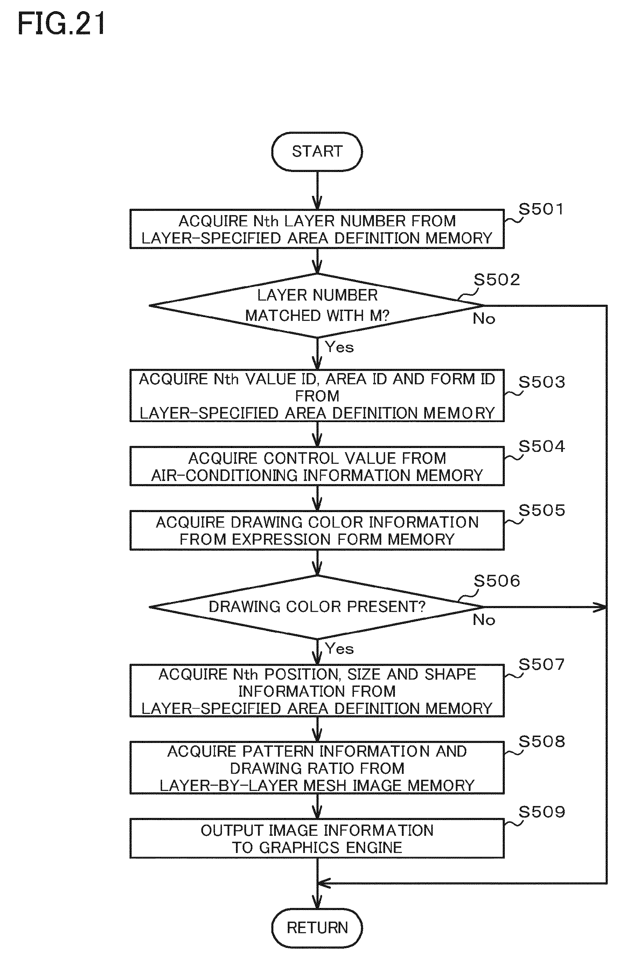

In next step S406, the area drawing manager 24 executes a subroutine illustrated in FIG. 21 to draw a pattern image. In first step S501, the area drawing manager 24 reads a layer number for an Nth pattern image from the layer-specified area definition memory 24d. When the counter value N is "1", for example, the area drawing manager 24 reads the layer number positioned in the first row in the table shown in FIG. 17. Accordingly, the area drawing manager 24 acquires the layer number.

In next step S502, the area drawing manager 24 determines whether the layer number acquired in step S501 matches with the counter value M. When the layer number does not match with the counter value M (step S502: No), the area drawing manager 24 terminates the subroutine, and goes to step S407. When the layer number matches with the counter value M (step S502: Yes), on the other hand, the area drawing manager 24 goes to step S503.

In step S503, the area drawing manager 24 reads a value ID, an area ID and a form ID for the Nth pattern image from the layer-specified area definition memory 24d. When the counter value N is "1", for example, the area drawing manager 24 reads the value ID, the area ID and the form ID positioned in the first row in the table shown in FIG. 17. Accordingly, the area drawing manager 24 acquires the value ID, the area ID and the form ID for the pattern image P1 corresponding to the area A1.

In next step S504, the area drawing manager 24 reads a control value according to the area ID acquired in step S503 from the air-conditioning information memory 23. When the area ID whose content is "area A1" is acquired in step S503, for example, the area drawing manager 24 reads a value "25" of the control value positioned in the first row in the table shown in FIG. 16. Accordingly, the area drawing manager 24 acquires the control value for the pattern image P1 corresponding to the area A1.

In next step S505, the area drawing manager 24 reads, from the expression form memory 24c, drawing color information, which corresponds to the form ID acquired in step S503 and is defined by the control value acquired in step S504. When the content of the area ID acquired in step S503 is "area A1" and the control value acquired in step S504 is "25", for example, the area drawing manager 24 reads, from the table shown in FIG. 19, drawing color information whose content is "yellow" as drawing color information which corresponds the form ID "1" and at the time when the control value is equal to or greater than "24" and is less than "28".

In next step S506, the area drawing manager 24 determines whether the content of the drawing color information is "none", or other than "none", namely, "yellow", "orange", "red", "blue", "light blue" or "yellow", as seen with reference to FIG. 19. When the content of the drawing color information is none of "yellow", "orange" and "red" (step S506: No), the area drawing manager 24 terminates the subroutine, and goes to step S407. When the content of the drawing color information is one of "yellow", "orange", "red" and the like (step S506: Yes), on the other hand, the area drawing manager 24 goes to step S507.

In step S507, the area drawing manager 24 reads positional information, size information and shape information for the Nth pattern image from the layer-specified area definition memory 24d. When the counter value N is "1", for example, the area drawing manager 24 reads the positional information, size information and shape information positioned in the first row in the table shown in FIG. 19. Accordingly, the area drawing manager 24 acquires the positional information, size information and shape information for the pattern image P1 which correspond to the area A1.

In next step S508, referring to the counter value M, the area drawing manager 24 acquires information on the pattern and the image ratio from the layer-by-layer mesh image memory 24e. When he counter value M is "1", for example, information on the pattern and the drawing ratio which correspond to the layer number "1" is acquired. When the counter value M is "2", information on the pattern and the drawing ratio which correspond to the layer number "2" is acquired.

In next step S509, the area drawing manager 24 outputs image information relating to the pattern image acquired in steps S505, S507 and S508 to the graphics engine. When the counter value N is "1", and the counter value M is "1", for example, the area drawing manager 24 outputs the positional information, size information and shape information positioned in the first row in the table shown in FIG. 17, information on the pattern and the drawing ratio which correspond to the layer number "1" shown in FIG. 18, and the drawing color information shown in FIG. 19 to the graphics engine.

Accordingly, a rectangular pattern image P1 with the X-axial directional size and the Y-axial directional size of (85d, 140d) is drawn on the first layer of the liquid crystal panel 26a constituting the display 26 at a position corresponding to the position of (10, 90). Next, this pattern image P1 is filled with a pattern corresponding to the display color of "yellow" and having the drawing ratio of 100%.

Further, when the counter value N is "6", and the counter value M is "2", for example, the area drawing manager 24 outputs the positional information, size information and shape information positioned in the sixth row in the table shown in FIG. 17, information on the pattern and the drawing ratio which correspond to the layer number "2" shown in FIG. 18, and the drawing color information shown in FIG. 19 to the graphics engine.

Accordingly, a circular pattern image P6 with a radius of (60d) is drawn on the second layer of the liquid crystal panel 26a constituting the display 26 at a position corresponding to the position of (80, 230). Next, this pattern image P6 is filled with a pattern corresponding to the display color of "light blue" and having the drawing ratio of 50%.

When the process in step S509 ends, the area drawing manager 24 terminates the subroutine, and goes to step S407.

In step S407, the area drawing manager 24 determines whether the counter value N is equal to or greater than a threshold value. The threshold value is equivalent to the number of pattern images P1 to P8 to be displayed on the display 26, and is "8" here. When the counter value N is not equal to or greater than the threshold value, the area drawing manager 24 returns to step S405 to thereafter repetitively execute the processes of steps S405 to S407 until the decision in step S407 becomes affirmative. Accordingly, as shown in FIG. 15, the pattern images P1 to P5 or the pattern images P6 to P8 filled with patterns of predetermined colors are sequentially drawn on the first layer of the liquid crystal panel 26a constituting the display 26. When the counter value N is equal to or greater than the threshold value (=8), on the other hand, the area drawing manager 24 goes to step S408.

In next step S408, the area drawing manager 24 determines whether the counter value M is equal to or greater than a threshold value. The threshold value is equivalent to the number of layers on which the pattern images P1 to P8 are drawn, and is "2" here. When the counter value M is not equal to or greater than the threshold value, the area drawing manager 24 returns to step S403 to thereafter repetitively execute the processes of steps S403 to S408 until the decision in step S408 becomes affirmative. Accordingly, as shown in FIG. 15, the pattern images P1 to P5 filled with patterns of predetermined colors are drawn on the first layer, and the pattern images P6 to P8 filled with patterns of predetermined colors are drawn on the second layer. When the counter value M is equal to or greater than the threshold value (=2), on the other hand, the area drawing manager 24 goes to step S409.

In step S409, the area drawing manager 24 acquires frame image information from the structural drawing memory 24a.

In next step S410, the area drawing manager 24 outputs the frame image information to the graphics engine 25. Accordingly, a frame image FR shown in FIG. 15 is drawn on the third layer, and an image IM shown in FIG. 14 is displayed on the liquid crystal panel 26a of the display 26.

When the process in step S410 ends, the area drawing manager 24 returns to step S402 to thereafter repetitively execute the processes of steps S402 to S410.

According to the embodiment, as described above, rectangular pattern images P1 to P5 having fill patterns varying according to the air-conditioning statuses and disposed on the first layer, circular pattern images P6 to P8 having fill patterns varying according to the temperatures of air-conditioned airs discharged from the air conditioners 30 and disposed on the second layer, and a frame image FR which overlaps the pattern images P1 to P8 form an image IM representing the space in the office building 100 to be air-conditioned.

When the air-conditioning status, such as the temperature of each area A1 to A5 as space to be air-conditioned, or the temperature of air-conditioned air discharged from the air conditioner which air-conditions each area A1 to A5 changes, therefore, the rectangular or circular pattern images P1 to P8 have only to be drawn again with their fill patterns changed, regardless of the shape of each area A1 to A5. Therefore, the amount of information to be handled at the time of updating the image IM according to a change in air-conditioning status decreases, so that the image IM can be accurately updated in a short period of time.

According to the embodiment, the frame image FR shaped according to each area A1 to A5 is displayed overlapping the pattern images P1 to P8. Therefore, the shapes of the areas A1 to A5 presented to the user by the pattern images P1 to P5 match with the shapes of the areas A1 to A5 in the office building 100. Even when the shapes of the areas A1 to A5 are complex, therefore, the layout of the office building 100 can be displayed accurately.

According to the embodiment, as described above, the amount of information to be handled at the time of updating the image IM decreases. Therefore, a general-purpose drawing unit, rather than an operation device with a comparatively fast processing speed, can be used, thus achieving cost reduction and downsizing of the device.

According to the embodiment, the mesh patterns of the pattern images P1 to P5 to be displayed on the first layer have a lower drawing ratio, and thus appear coarser than the mesh patterns of the pattern images P6 to P8 to be displayed on the second layer. This is not restrictive; the graphics engine 25 may start drawing a pattern image whose mesh pattern has the highest drawing ratio, and draw a pattern image whose mesh pattern has the lowest drawing ratio last. In this case, pattern images with coarse mesh patterns are sequentially overwritten. This can permit the individual pattern images P1 to P8 to be drawn on the same layer.

While the individual embodiments of the invention have been described above, the invention is not limited to those embodiments.

For example, the descriptions of the embodiments have been given of the case where the remote control device 20 is used to control the air conditioners 30. This is not restrictive, and the remote control device 20 may be used to control equipments other than air conditioners.

The invention can be worked out in various embodiments and modifications without departing from the spirit and scope of the invention in the broad sense. In addition, the embodiments are just illustrative, and shall not limit the scope of the invention. The scope of the invention shall be defined by the appended claims, not the embodiments. Various modifications which are provided by the claims and the scope of the subject matters equivalent thereto should be construed as being encompassed within the scope of the invention.

### Industrial Applicability

The remote control device according to the invention is suitable for controlling equipments. In addition, the air-conditioning system according to the invention is suitable for air-conditioning space to be air-conditioned.

### Reference Signs List

10, 10A Air-conditioning system
20 Remote control device
21 Air-conditioning system communicator
22 Air-conditioner controller
23 Air-conditioning information memory
24 Area drawing manager
24a Structural drawing memory
24b Area definition memory
24c Expression form memory
24d Layer-specified area definition memory
24e Layer-by-layer mesh image memory
25 Graphics engine
25a Image drawer
25b Clipping drawing function
25c Figure drawer
25d Mesh pattern drawing function
26 Display
26a Display panel
30 Air conditioner
40 Temperature sensor terminal
70 Network
100 Office building
101, 102 Work space
103 Column
104 Partition
110 Partition wall
A1 to A5 Area
FR Frame image
FRa Partial image
IM Image
P1 to P8 Pattern image
S 1 Full drawing process
S2 Difference drawing process

## Claims

1. A remote control device with a display screen, comprising:
first storage means that stores control information for controlling an air conditioner disposed in a space to be air-conditioned;
second storage means that stores first information regarding a first image representing an air-conditioning status of the space to be air-conditioned, and second information regarding a second image representing a structure defining the space to be air-conditioned; and
a graphics engine that draws the first image on display means and fills the first image with a pattern defined by the control information based on the first information, and draws the second image over the first image on display means based on the second information.

2. The remote control device according to Claim 1, wherein the graphics engine fills the first image with a color defined by the control information.

3. The remote control device according to Claim 1 or 2, wherein the graphics engine draws a tile image filled with a color defined by the control information over the first image to fill the first image.

4. The remote control device according to Claim 1, wherein the graphics engine fills the first image with a mesh pattern defined by the control information.

5. The remote control device according to Claim 4, wherein the first image is displayed on a first layer or a second layer overlapping the first layer,
third storage means is included to store information on a mesh pattern to fill the first image to be displayed on the first layer, and information on a mesh pattern to fill the first image to be displayed on the second layer, and
the graphics engine fills the first images displayed on the first layer and the second layer based on the information stored in the third storage means.

6. The remote control device according to Claim 5, wherein the mesh pattern to fill the first image to be displayed on the second layer is rougher than the mesh pattern to fill the first image to be displayed on the first layer.

7. The remote control device according to any one of Claims 1 to 6, wherein when the control information is updated,
the graphics engine draws the first image filled with a pattern defined by the updated control information on display means based on the first information, and overwrites a partial image of the second image which overlaps the first image on display means based on the second information.

8. The remote control device according to any one of Claims 1 to 7, wherein the first information and the second information are information compressed in a predetermined format, and
the graphics engine expands the compressed first information and second information, and draws the first image on the display means based on the expanded first information, and draws the second image on the display means based on the expanded second information.

9. The remote control device according to any one of Claims 1 to 8, wherein the first image and the second image are polygons or circles.

10. The remote control device according to any one of Claims 1 to 9, comprising a control means that extracts predetermined information from the storage means, and outputs the predetermined information to the graphics engine,
wherein upon reception of the predetermined information from the control means, the graphics engine draws the first image and the second image independently of the control means.

11. The remote control device according to any one of Claims 1 to 10, wherein the first image is filled with a pattern corresponding to a temperature of the space to be air-conditioned or a pattern corresponding to a temperature of air-conditioned air which is output from the air conditioner.

12. An air-conditioning system comprising:
the remote control device recited in any one of Claims 1 to 11; and
the air conditioner that air-conditions the space to be air-conditioned based on a command input via the remote control device.
